# EUROPÄISCHE PATENTANMELDUNG

(11) **EP 4 151 358 A1**
(43) Veröffentlichungstag der Anmeldung: **22.03.2023**
(21) Anmeldenummer: 21197107.2
(22) Anmeldetag: 16.09.2021
(51) Int. Cl.: B23Q 3/06, A61C 13/00

(54) **HALTEVORRICHTUNG FÜR EINEN ROHLING**

(71) Anmelder: Ivoclar Vivadent AG, 9494 Schaan (LI)
(72) Erfinder: HABIT, Andreas, 6774 Tschagguns (AT)
(74) Vertreter: Baldus, Oliver

(57) **Zusammenfassung**

Haltevorrichtung (100) für einen Rohling (200), mit einem ersten Halteelement (101-1) zum Einlegen des Rohlings (200); und einem zweiten Halteelement (101-2) zum Einspannen des Rohlings (200), das durch eine Drehbewegung an dem ersten Halteelement (101-1) arretierbar ist.

## Beschreibung

Die vorliegende Erfindung betrifft eine Haltevorrichtung für einen Rohling, ein Hilfswerkzeug zum Öffnen der Haltevorrichtung und ein Verfahren zum Halten des Rohlings.

Im Rahmen des täglichen Gebrauches von Dentalfräsgeräten, die scheibenförmige Rohlinge verarbeiten, sogenannte Ronden, sind regelmäßig Materialwechsel (Bestückungsvorgänge) erforderlich. Bei diesen Vorgängen wird der Rohling aus einer Werkstückaufnahme entnommen und durch einen neuen Rohling getauscht. Dieser Vorgang ist je nach Dentalfräsgerät und Hersteller unterschiedlich. Da diese Vorgänge eine Interaktion des Benutzers erfordern, sollten diese so einfach und zeitsparend wie möglich gehalten werden.

Zum Entriegeln heutiger Haltevorrichtungen für Fräsrohlinge werden derzeit vier Schrauben gelöst, so dass im Anschluss ein Klemmring entnommen und der Rohling ersetzt werden kann. Danach wird der Klemmring wieder eingesetzt, die Schrauben werden von Hand angesetzt und mit einem vorgegebenen Drehmoment festgeschraubt. Dieser Vorgang ist zeitintensiv und erfordert Fingerspitzengefühl, Werkzeug und Aufmerksamkeit.

Es ist daher die technische Aufgabe der vorliegenden Erfindung, das Einlegen eines Rohlings in eine Haltevorrichtung zu vereinfachen und zu beschleunigen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Haltevorrichtung für einen Rohling gelöst, mit einem ersten Halteelement zum Einlegen des Rohlings; und einem zweiten Halteelement zum Einspannen des Rohlings, das durch eine Drehbewegung an dem ersten Halteelement arretierbar ist. Durch die Haltevorrichtung wird eine Zeitersparnis beim Ein- und Ausspannen des Rohlings erreicht. Zudem wird der Rohling stabil zwischen den beiden Halteelementen gehalten.

In einer technisch vorteilhaften Ausführungsform der Haltevorrichtung ist das zweite Halteelement durch einen offenen oder geschlossenen Federring gebildet. Dadurch wird beispielsweise der technische Vorteil erreicht, dass der Rohling durch eine Drehbewegung fixiert werden kann. Der Federring lässt sich auf einfache Weise herstellen.

In einer weiteren technisch vorteilhaften Ausführungsform der Haltevorrichtung umfasst der Federring radial hervorstehende Führungsabschnitte. Die Führungsabschnitte können sektorförmig radial hervorstehen. Dadurch wird beispielsweise der technische Vorteil erreicht, dass die Führungsabschnitte sich an ansprechenden Hinterschnitten in dem ersten Halteelement abstützen können.

In einer weiteren technisch vorteilhaften Ausführungsform der Haltevorrichtung umfassen die radial hervorstehenden

Führungsabschnitte jeweils einen Federabschnitt zum Erzeugen einer Spannkraft auf den Rohling in Richtung des ersten Halteelements. Dadurch wird beispielsweise der technische Vorteil erreicht, dass Rohlinge federnd mit einer vorgegebenen Spannkraft in die Haltevorrichtung eingesetzt werden können.

In einer weiteren technisch vorteilhaften Ausführungsform der Haltevorrichtung erstrecken sich die Führungsabschnitte über die Hinterschnitte. Dadurch wird beispielsweise ebenfalls der technische Vorteil erreicht, dass sich die Führungsabschnitte an den Hinterschnitten abstützen können.

In einer weiteren technisch vorteilhaften Ausführungsform der Haltevorrichtung umfasst zumindest ein Federabschnitt ein Anschlagselement zum Begrenzen der Drehbewegung. Dadurch wird beispielsweise der technische Vorteil erreicht, dass ein Überdrehen des zweiten Halteelements verhindert wird und der korrekte Sitz des Federrings durch den Anschlag vorgegeben ist.

In einer weiteren technisch vorteilhaften Ausführungsform der Haltevorrichtung umfasst das erste Halteelement Hinterschnitte zum Abstützen der Federabschnitte des zweiten Halteelements in axialer Richtung. Dadurch wird beispielsweise der technische Vorteil erreicht, dass eine gute Befestigung des ersten und zweiten Halteelements erreicht wird.

In einer weiteren technisch vorteilhaften Ausführungsform der Haltevorrichtung sind die Hinterschnitte um die Werkstückaufnahme herum angeordnet. Dadurch wird beispielsweise der technische Vorteil erreicht, dass eine gleichmäßige Kraftverteilung auf den Rohling ausgeübt werden kann.

In einer weiteren technisch vorteilhaften Ausführungsform der Haltevorrichtung umfasst das erste Halteelement ein Kugeldruckstück, ein Feder-Nut-System oder ein Adapterstück zum Einrasten in dem Rohling. Dadurch wird beispielsweise der technische Vorteil erreicht, dass erforderliche Anpassungen und Positionierungen auf einfache Weise vorgenommen werden können.

In einer weiteren technisch vorteilhaften Ausführungsform der Haltevorrichtung umfasst das erste Halteelement ein Verriegelungselement zum Verriegeln des zweiten Halteelements in einer geschlossenen Position. Dadurch wird beispielsweise der technische Vorteil erreicht, dass ein unbeabsichtigtes Lösen oder Öffnen der Haltevorrichtung verhindert wird.

In einer weiteren technisch vorteilhaften Ausführungsform der Haltevorrichtung sind das erste Halteelement und/oder das zweite Halteelement aus einem glasfaserverstärkten Material gebildet. Die Haltevorrichtung kann dann einen Funk-Chip (RFID - Radio-Frequency Identification) umfassen. Dadurch wird beispielsweise der technische Vorteil erreicht, dass Funkwellen durch die Haltevorrichtung hindurchtreten können. Trotzdem weisen die Haltelemente eine hohe Stabilität auf.

Gemäß einem zweiten Aspekt wird die technische Aufgabe durch ein Hilfswerkzeug zum Öffnen einer Haltevorrichtung gelöst, das zumindest ein Eingriffselement zum Eingreifen in ein Loch oder eine Nut des zweiten Halteelements umfasst. Dadurch wird beispielsweise der technische Vorteil erreicht, dass der Rohling schnell und mit großer Spannkraft in der Haltevorrichtung eingespannt werden kann.

Gemäß einem dritten Aspekt wird die technische Aufgabe durch ein Verfahren zum Halten eines Rohlings gelöst, mit den Schritten eines Einlegens des Rohlings in ein erstes Halteelement; und eines Einspannens des Rohlings durch eine Drehbewegung eines zweiten Halteelements, das an dem ersten Halteelement arretierbar ist. Dadurch werden die gleichen technischen Vorteile wie durch die Haltevorrichtung nach dem ersten Aspekt erreicht.

In einer technisch vorteilhaften Ausführungsform des Verfahrens wird eine Spannkraft auf den Rohling in Richtung des ersten Halteelement erzeugt. Dadurch wird beispielsweise der technische Vorteil erreicht, dass der Rohling zuverlässig in die Haltevorrichtung eingespannt werden kann.

In einer weiteren technisch vorteilhaften Ausführungsform des Verfahrens werden die Federabschnitte des zweiten Halteelements an Hinterschnitten des ersten Halteelements abgestützt. Dadurch wird beispielsweise der technische Vorteil erreicht, dass der Rohling fest zwischen den Halteelementen eingespannt werden kann.

Ausführungsbeispiele der Erfindung sind in den Zeichnungen dargestellt und werden im Folgenden näher beschrieben.

Es zeigen:
- Fig. 1: eine zusammengesetzte Haltevorrichtung mit einem Rohling, einem ersten und einem zweiten Halteelement;
- Fig. 2: eine Ansicht eines ersten Halteelements einer Haltevorrichtung;
- Fig. 3: eine Ansicht eines zweiten Halteelements einer Haltevorrichtung;
- Fig. 4: eine Ansicht eines Rohlings;
- Fig. 5: eine Haltevorrichtung mit einem Hilfswerkzeug zum Öffnen der Haltevorrichtung;
- Fig. 6: eine weitere Ansicht der Haltevorrichtung mit einem beweglichen Verriegelungselement;
- Fig. 7: eine sekundäre Verriegelung der Haltevorrichtung; und
- Fig. 8: ein Blockdiagramm eines Verfahrens zum Halten eines Rohlings.

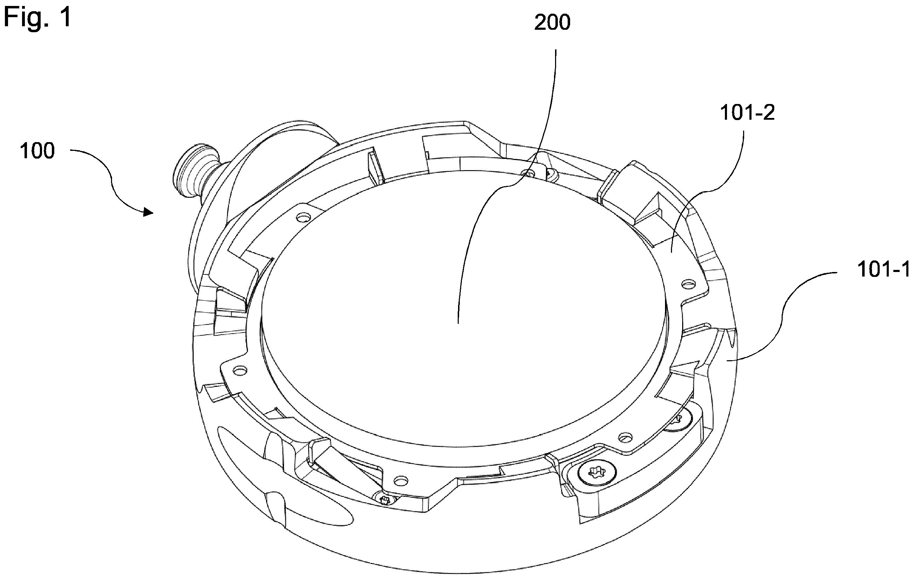

Fig. 1 zeigt eine zusammengesetzte Haltevorrichtung 100 mit einem Rohling 200, einem ersten und einem zweiten Halteelement 101-1 und 101-2. Die Haltevorrichtung 100 dient zum Einspannen und Halten des Rohlings 200 in einer Dentalfräsmaschine. Die Haltevorrichtung 100 mit den Halteelementen 101-1 und 101-2 bildet ein Schnellspannsystem, das auf dem Prinzip eines Bajonettverschlusses basiert. Aus dem Rohling 200 können Dentalobjekte, wie beispielsweise Kronen oder Brücken, mittels der Dentalfräsmaschine gefräst werden.

Die Haltevorrichtung 100 kann als Schnellspannsystem modular in die Dentalfräsmaschine eingesetzt werden. Die Haltevorrichtung 100 kann aber auch direkt in der Dentalfräsmaschine verwendet werden, bei der das erste Halteelement 101-1 ein integraler Bestandteil der Dentalfräsmaschine ist und nicht gewechselt werden muss.

Ein falsches Einlegen des Rohlings 200, wie beispielsweise ein Vertauschen der Ober- und Unterseite, kann durch eine entsprechende Formgebung des Rohlings 200 und der Halteelemente 101-1 und 101-2 verhindert werden. In der Haltevorrichtung 100 wird eine Spannkraft auf den Rohling 200 mittels einer Drehung eines Federrings durch gegenüberliegende Hinterschnitte erzeugt. Dadurch kann der Rohling 200 stabil zwischen den Halteelementen 101-1 und 101-2 fixiert werden. Dies findet in Zusammenspiel mit einem bajonettartigen Verriegelungsmechanismus statt.

Die Haltevorrichtung 100 erfordert kein Schraubgewinde für Befestigungsschrauben, die bei der Benutzung oft beschädigt werden oder gelöste Gewindeeinsätze entstehen. Zum Einspannen des Rohlings 200 in der Haltevorrichtung 100 sind daher keine Drehmomentschlüssel oder Befestigungsschrauben erforderlich, die verloren gehen, beschädigt oder verschleißen können. Die Spannkraft auf den Rohling 200 hängt nicht mehr von der richtigen Anwendung eines Drehmomentschlüssels beim Anziehen von Befestigungsschrauben ab. Zudem ist die Haltevorrichtung 100 kompatibel mit Wechsler-Systemen.

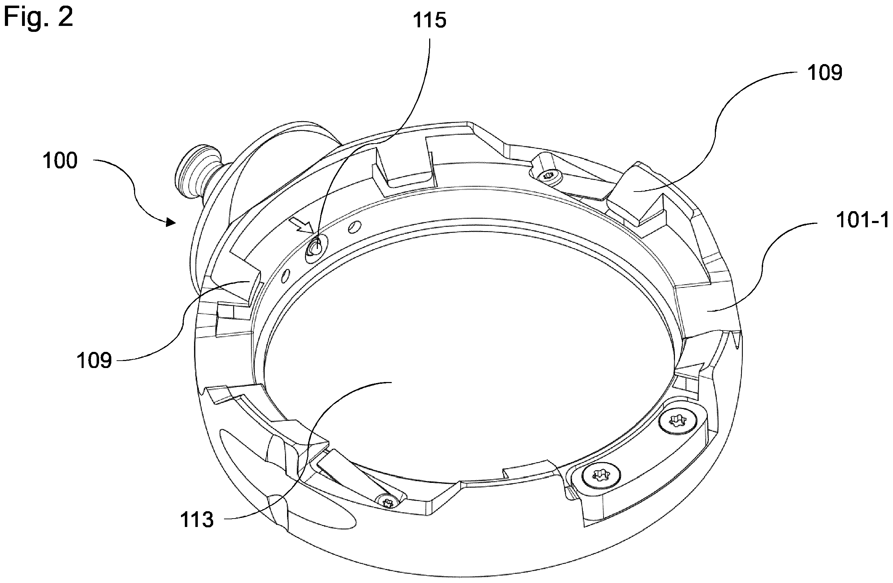

Fig. 2 zeigt eine Ansicht des ersten Halteelements 101-1 der Haltevorrichtung 100. Das Halteelement 101-1 ist ringförmig ausgebildet. In dem Inneren des Halteelements 101-1 wird der Rohling 200 eingesetzt und aufgenommen. Das erste Halteelement 101-1 umfasst zu diesem Zweck eine zylinderförmige Werkstückaufnahme 113 zum Einlegen des scheibenförmigen Rohlings 200.

Der Rohling 200 wird mit der richtigen Seite nach Oben in das Halteelement 101-1 eingelegt. In das Innere der Haltevorrichtung 100 ragt ein Kugeldruckstück 115, an dem der Rohling 200 einrastet. Das Kugeldruckstück 115 kann in einer passenden Nut oder Bohrung 201 an der Außenseite des Rohlings 200 einrasten und positioniert somit den Rohling 200. Dazu dreht der Benutzer den Rohling im Halteelement 101-1, bis das Kugeldruckstück 115 in der Nut im Rohling 200 einrastet. Es entsteht hier ein hörbares Einrastgeräusch, wenn der Rohling 200 auf die richtige Position gedreht wird.

Bei der Verwendung eines Rohlings 200 ohne diese Bohrung oder Nut 201 federt das Druckstück 115 ein und wird in dem ersten Halteelement 101-1 aufgenommen. Dadurch kann eine Kompatibilität mit anderen Rohlingen sichergestellt werden. Für andere Rohlinge 200 können passende Adapterstücke verwendet werden.

Der Benutzer legt nun den Federring 103 in das Halteelement 101-1. An der Oberseite des Halteelements 101-1 sind mehrere taschenförmige Hinterschnitte 109 angeordnet. Diese Hinterschnitte 109 können federnd gelagert sein. Die kreisförmig angeordneten Hinterschnitte 109 sind in der Anzahl und Form variabel. Die Hinterschnitte 109 dienen zum Abstützen des Federrings 103 als zweites Halteelement 101-1.

Eine anschließende Drehung des Federrings 103 um ca. 45° erzeugt die gewünschte Spannkraft auf den Rohling 200. Im Allgemeinen kann der Drehwinkel jedoch auch anders gewählt werden. Der eingespannte Rohling 200 ist in der Haltevorrichtung 100 nun in dem Dentalfräsgerätdirekt einsatzbereit. Die Drehung des Federrings 103 kann je nach Spannkraft manuell mit den Händen oder mittels eines Hilfswerkzeugs erfolgen. Durch die Haltevorrichtung 100 wird eine Zeitersparnis pro Materialwechsel von mehreren Minuten erreicht, ohne dass Befestigungsschrauben angezogen oder gelöst werden müssen.

Die Halteelemente 101-1 und 101-2 können spritzgussgerecht konstruiert sein, so dass diese mit geringem Aufwand herstellbar ist, wie beispielsweise durch Metallguss oder Kunststoffspritzguss. Das Halteelement 101-1 kann auch als glasfaserverstärktes Bauteil ausgestaltet sein. In diesem Fall können Funkwellen eines RFID-Chips durch das Bauteil hindurchtreten, der in dem Halteelement 101-1 angeordnet ist. Auf diese Weise kann die Haltevorrichtung 100 mittels eines RFID-Chips oder eines anderen Chips gekennzeichnet werden und der RFID-Chip kann durch die Haltevorrichtung 100 hindurch ausgelesen werden.

Die Hinterschnitte 109 können auch mittels eines Kraftschlusses das zweite Halteelement 101-1 am ersten Halteelement 101-1 fixieren. Zum Beispiel können die Hinterschnitte 109 federnd gelagert sein und mittels eines Hebels gemeinsam fixiert werden. Auf diese Weise kann das zweite Halteelement 101-1 am ersten Halteelement 101-1 eingeklemmt werden.

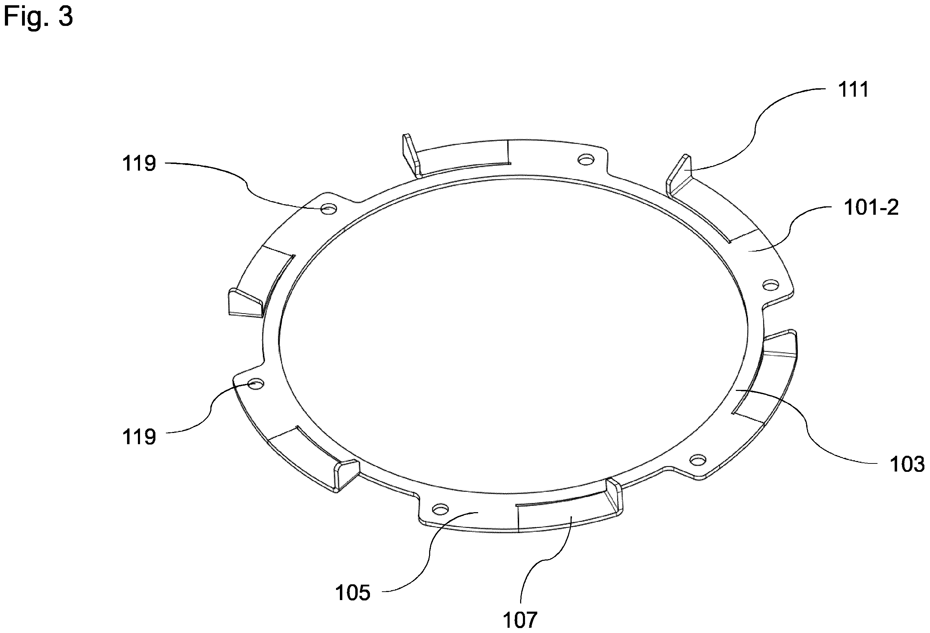

Fig. 3 zeigt eine Ansicht des zweiten Halteelements 101-2 der Haltevorrichtung 100. Das zweite Halteelement 101-2 wird durch einen flachen und runden Federring 103 gebildet. Durch den Federring 103 wird eine Spannkraft auf den Rohling 200 in Richtung des ersten Halteelements 101-1 ausgeübt. Bei hohen benötigten Spannkräften kann ein Hilfswerkzeug zum Ver- und Entriegeln des Federrings 103 verwendet werden.

Der Federring 103 umfasst radial hervorstehende Führungsabschnitte 105, die sich sternförmig nach außen erstrecken. Die Führungsabschnitte 105 bilden kreisförmig angeordnete, vorgebogene Konturen. Die Führungsabschnitte 105 ermöglichen es, mittels einer Drehung im Zusammenspiel mit den gegenüberliegenden Hinterschnitten 109 eine Vorspannung zwischen dem ersten Halteelement 101-1, dem zweiten Halteelement 101-2 und dem Rohling 200 zu erzeugen.

Die Führungsabschnitte 105 umfassen jeweils einen Federabschnitt 107 zum Erzeugen einer Spannkraft auf den Rohling 200 in Richtung des ersten Halteelements 101-1. Die Federabschnitte 107 umfassen wiederum ein abgebogenes Anschlagselement 111 zum Begrenzen der Drehbewegung.

Der Federring 103 kann geschlossen oder offen ausgestaltet sein, beispielsweise wenn dieser einen radialen Schlitz aufweist. Durch die variable Gestaltung des Federrings 103 hinsichtlich einer Form, eines Winkels, einer Materialstärke und -güte kann die Spannkraft auf den Rohling 200 angepasst werden, da unterschiedliche Rohlinge 200 unterschiedliche Spannkräfte erfordern. Die Spannkraft auf den Rohling 200 kann mit unterschiedlichen Federringen 103 variabel eingestellt werden, wie beispielsweise durch separate Federringe 103 aus Zirkon oder Metall. Der Federring 103 kann durch ein Laser- oder Blechbiegeteil gebildet sein.

Der Federring 103 umfasst an seinem Umfang mehrere Löcher 119. Die Löcher 119 ermöglichen einen Eingriff eines Hilfswerkzeugs, um den Federring 103 zu öffnen. Zu diesem Zweck können auch Nuten im Federring 103 angeordnet sein, in die das Hilfswerkzeug eingreifen kann.

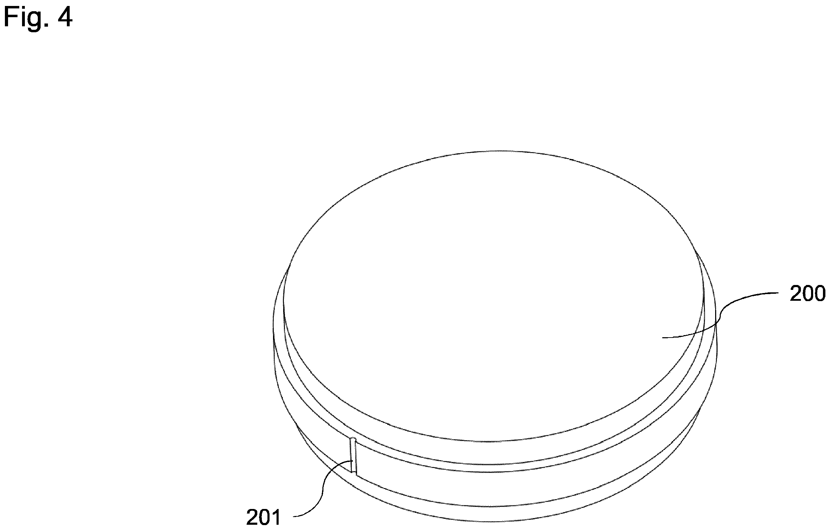

Fig. 4 zeigt eine Ansicht eines Rohlings 200. Der Rohling 200 ist kreisrund und scheibenförmig. Im Allgemeinen sind jedoch auch andere Formen des Rohlings 200 möglich, wie beispielsweise rechteckig oder sechseckig. Der Rohling 200 umfasst eine Nut 201, in die das Kugeldruckstück 115 des ersten Haltelements 115 eindringt, so dass eine eindeutige Position des Rohlings 200 innerhalb der Haltevorrichtung 100 angegeben ist.

Um das Öffnen der Haltevorrichtung 100 zu ermöglichen, können sich die Führungsabschnitte 105 über die Hinterschnitte 109 erstrecken. In diesem Fall kann die Haltevorrichtung 100 per Hand oder mittels des Hilfswerkzeugs 200 durchgeführt werden. Ein lang ausgestalteter Hinterschnitt 109 ermöglicht die Arretierung mittels eines offenen Federrings 103.

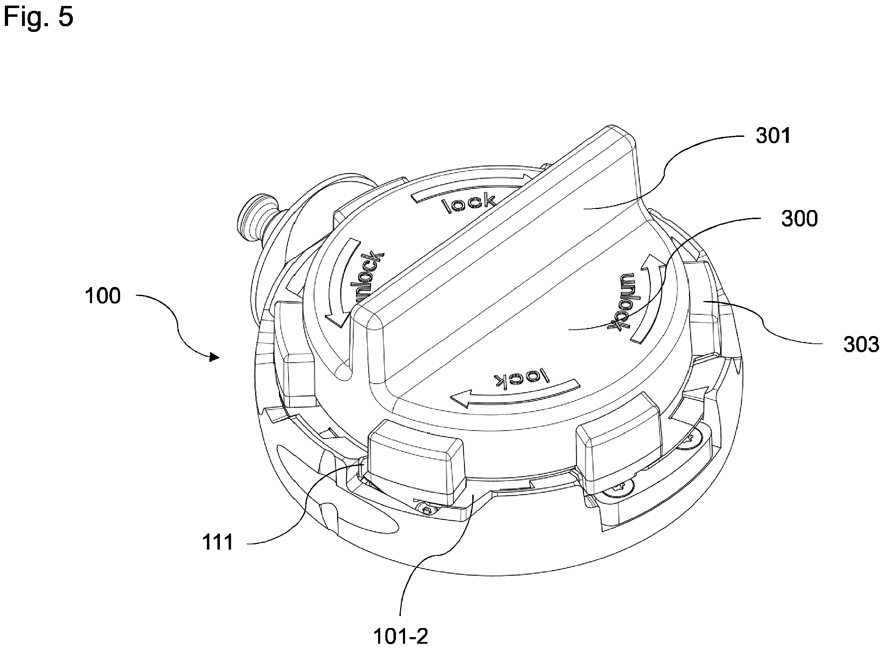

Fig. 5 zeigt eine Haltevorrichtung 100 mit einem Hilfswerkzeug 300 zum Öffnen der Haltevorrichtung 100. Das Hilfswerkzeug 300 umfasst einen Griff 301, durch den das Hilfswerkzeug 300 manuell gedreht werden kann. Um das Hilfswerkzeug 300 herum sind Stifte 303 angeordnet, die beim Aufsetzen des Hilfswerkzeugs 300 auf die Haltevorrichtung 100 in die Löcher 119 oder Nuten des zweiten Halteelements 101-1 eindringen. Auf diese Weise kann mittels des Hilfswerkzeugs 300 ein Drehmoment auf das zweite Halteelement 101-2 ausgeübt werden, um dieses an dem ersten Halteelement 101-1 zu befestigen oder zu lösen.

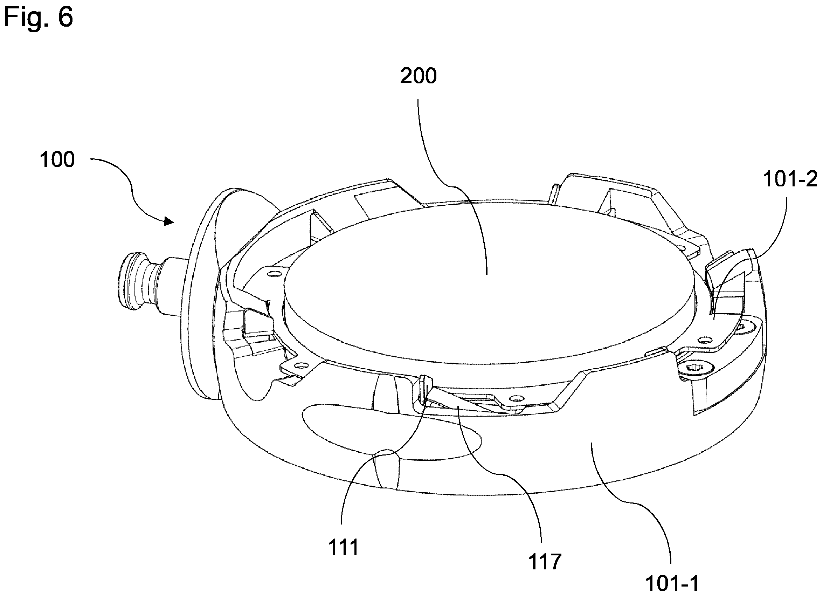

Fig. 6 zeigt eine weitere Ansicht der Haltevorrichtung 100 mit einem Verriegelungselement 117. Der Federring 103 wird durch das Verriegelungselement 117 arretiert. Das Verriegelungselement 117 ist an dem ersten Halteelement 101-1 beweglich gelagert und stützt sich an dem Anschlagselement 111 des zweiten Halteelements 101-2 ab. Dadurch wird ein Lösen des Federrings 103 verhindert. Erst wenn das Verriegelungselement 117 nach unten gedrückt wird, wird der Federring 103 freigegeben.

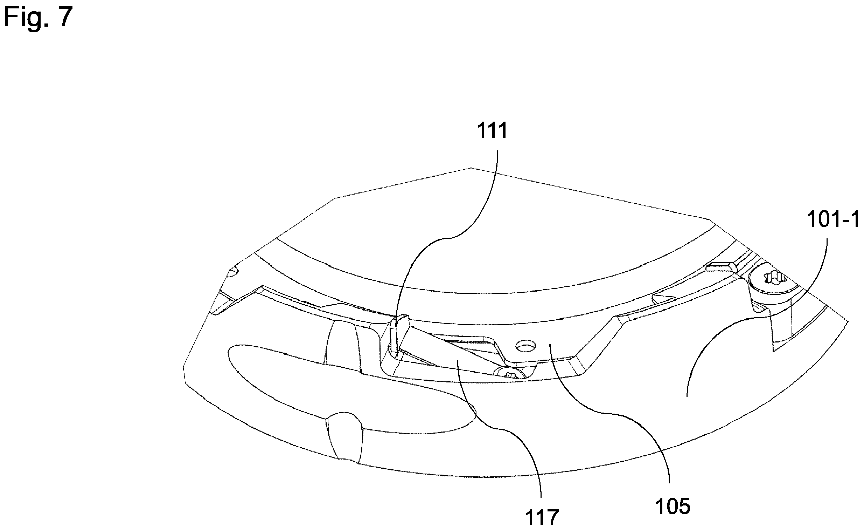

Fig. 7 zeigt eine sekundäre Verriegelung der Haltevorrichtung 100. Bei hohen Drehmomenten auf den Rohling 200 durch die Bearbeitungskräfte in der Dentalfräsmaschine kann eine Entriegelung durch eine sekundäre Verrieglung verhindert werden. Die sekundäre Verriegelung umfasst das federnde Verriegelungselement 117, das nach oben springt, wenn der Federring 103 in der Schließposition arretiert.

Das hebelartige Verriegelungselement 117 ist an dem ersten Halteelement 101-1 drehbar angeordnet und stützt sich in verriegeltem Zustand an dem Anschlagselement 111 des zweiten Haltelements 101-2 ab. Das Verriegelungselement 117 verhindert dadurch, dass eine Vibration beim Fräsen den Federring 103 löst. Das Verriegelungselement 117 wird beim Entriegeln durch entsprechende Stifte des Hilfswerkzeugs 300 nach unten gedrückt und dadurch freigegeben. In dieser Position kann das zweite Haltelement 101-2 gedreht werden.

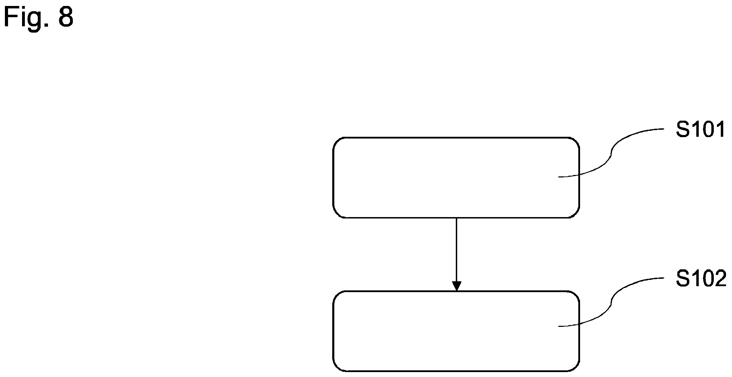

Fig. 8 zeigt ein Blockdiagramm eines Verfahrens zum Halten des Rohlings 200. In Schritt S101 wird der Rohling 200 in das erste Halteelement 101-1 eingelegt. In Schritt S102 wird der Rohling 200 durch eine Drehbewegung des zweiten Halteelements 101-2 in der Haltevorrichtung 100 eingespannt, das an dem ersten Halteelement 101-1 arretierbar ist. Dadurch wird eine stabile Fixierung des Rohlings 200 zwischen den beiden Halteelementen 101-1 und 101-2 erreicht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Haltevorrichtung
- 101: Halteelement
- 103: Federring
- 105: Führungsabschnitt
- 107: Federabschnitt
- 109: Hinterschnitt
- 111: Anschlagelement
- 113: Werkstückaufnahme
- 115: Kugeldruckstück
- 117: Verriegelungselement
- 119: Loch

- 200: Rohling
- 201: Nut

- 300: Hilfswerkzeug
- 301: Griff
- 303: Stifte

## Patentansprüche

1. Haltevorrichtung (100) für einen Rohling (200), mit:
- einem ersten Halteelement (101-1) zum Einlegen des Rohlings (200); und
- einem zweiten Halteelement (101-2) zum Einspannen des Rohlings (200), das durch eine Drehbewegung an dem ersten Halteelement (101-1) arretierbar ist.

2. Haltevorrichtung (100) nach Anspruch 1, wobei das zweite Halteelement (101-1) durch einen offenen oder geschlossenen Federring (103) gebildet ist.

3. Haltevorrichtung (100) nach Anspruch 2, wobei der Federring (103) radial hervorstehende Führungsabschnitte (105) umfasst.

4. Haltevorrichtung (100) nach Anspruch 3, wobei die radial hervorstehenden Führungsabschnitte (105) jeweils einen Federabschnitt (107) zum Erzeugen einer Spannkraft auf den Rohling (200) in Richtung des ersten Halteelements (101-1) umfassen.

5. Haltevorrichtung (100) nach Anspruch 3 oder 4, wobei sich die Führungsabschnitte (107) über die Hinterschnitte (109) erstrecken.

6. Haltevorrichtung (100) nach Anspruch 4 oder 5, wobei zumindest ein Federabschnitt (107) ein Anschlagselement (111) zum Begrenzen der Drehbewegung umfasst.

7. Haltevorrichtung (100) nach einem der vorangehenden Ansprüche, wobei das erste Halteelement (101-1) Hinterschnitte (109) zum Abstützen der Federabschnitte (107) des zweiten Halteelements (101-2) in axialer Richtung umfasst.

8. Haltevorrichtung (100) nach Anspruch 7, wobei die Hinterschnitte (109) um die Werkstückaufnahme (113) herum angeordnet sind.

9. Haltevorrichtung (100) nach einem der vorangehenden Ansprüche, wobei das erste Halteelement (101-1) ein Kugeldruckstück (115), ein Feder-Nut-System oder ein Adapterstück zum Einrasten in dem Rohling (200) umfasst.

10. Haltevorrichtung (100) nach einem der vorangehenden Ansprüche, wobei das erste Halteelement (101-1) ein Verriegelungselement (117) zum Verriegeln des zweiten Halteelements (101-1) in einer geschlossenen Position umfasst.

11. Haltevorrichtung (100) nach einem der vorangehenden Ansprüche, wobei das erste Halteelement (101-1) und/oder das zweite Halteelement (101-1) aus einem glasfaserverstärkten Material gebildet sind.

12. Hilfswerkzeug (300) zum Öffnen einer Haltevorrichtung (100) nach einem der Ansprüche 1 bis 11, das zumindest ein Eingriffselement zum Eingreifen in ein Loch oder eine Nut des zweiten Halteelements (101-2) umfasst.

13. Verfahren zum Halten eines Rohlings (200), mit:
- Einlegen (S101) des Rohlings (200) in ein erstes Halteelement (101-1); und
- Einspannen (S102) des Rohlings (200) durch eine Drehbewegung eines zweiten Halteelements (101-2), das an dem ersten Halteelement (101-1) arretierbar ist.

14. Verfahren nach Anspruch 13, wobei eine Spannkraft auf den Rohling (200) in Richtung des ersten Halteelement (101-1) erzeugt wird.

15. Verfahren nach Anspruch 13 oder 14, wobei Federabschnitte (107) des zweiten Halteelements (101-2) an Hinterschnitten (109) des ersten Halteelements (101-1) abgestützt werden.
